# EUROPEAN PATENT APPLICATION

(11) **EP 2 426 340 A1**
(43) Date of publication of application: **07.03.2012**
(21) Application number: 10009082.8
(22) Date of filing: 01.09.2010
(51) Int. Cl.: F02D 41/00, F02M 25/07

(54) **Apparatus and method for protecting against fouling of an exhaust gas recirculation valve**

(71) Applicant: International Engine Intellectual Property, Warrenville, IL 60555 (US)
(72) Inventor: Hsia, David M., Bartlett IL 60103 (DE); Rodruguez, Rogelio, Plainfield IL 60544 (US)
(74) Representative: Kuhnen & Wacker

(57) **Abstract**

This invention relates to a method for protecting an exhaust gas recirculation (EGR) valve from fouling due to hydrocarbon condensation at low EGR cooler outlet exhaust temperatures. In modem internal combustion engines exhaust gas recirculation (EGR) valves provide a means to recirculate exhaust gases into the intake air stream. The EGR valve regulates the flow of exhaust gas entering the stream. The EGR valve can experience fouling due to the condensation of hydrocarbons at low EGR cooler outlet exhaust temperatures. Typically, fouling occurs when the internal combustion engine is operating at relatively low temperatures, namely during low speed and/or low torque operations. The effects of fouling an EGR valve include higher emission levels, reduction in fuel economy, and rough idling.

## Description

### Field of Invention

This invention relates to an apparatus and method for protecting an exhaust gas recirculation (EGR) valve from fouling due to hydrocarbon condensation at low EGR cooler outlet exhaust temperatures.

### Background

In modem internal combustion engines exhaust gas recirculation (EGR) valves provide a means to control the recirculation of exhaust gases into the intake air stream. The EGR valve regulates the flow of exhaust gas entering the intake stream. The EGR valve can experience fouling due to the condensation of hydrocarbons at low EGR cooler outlet exhaust temperatures. Fouling may occur when the internal combustion engine is operating at relatively low temperatures, namely during low speed and/or low torque operations. The effects of fouling an EGR valve may include higher emission levels, a reduction in fuel economy, and/or rough idling.

### Summary of Invention

In accordance with one or more aspects of the present invention the fouling of EGR valves may be prevented by utilizing the EGR cooler outlet exhaust gas temperature sensor signal, or a model-based EGR cooler outlet gas temperature signal to shut off the EGR valve when the cooled exhaust gas temperature drop to or below a pre-determined threshold. The pre-determined threshold temperature may vary for each individual internal combustion engine should different materials and/or engine components be utilized. The pre-determined threshold may be determined by running various internal combustion engine tests. In order to accomplish this the internal combustion engine's electronic control module (ECM) may be utilized to process the EGR cooler outlet exhaust gas temperature sensor signal or compute a model-based estimated EGR cooler outlet exhaust gas temperature value for one or more engine operating conditions and then command the EGR valve closed during low EGR cooler exhaust gas temperatures.

### Brief Description of the Drawings

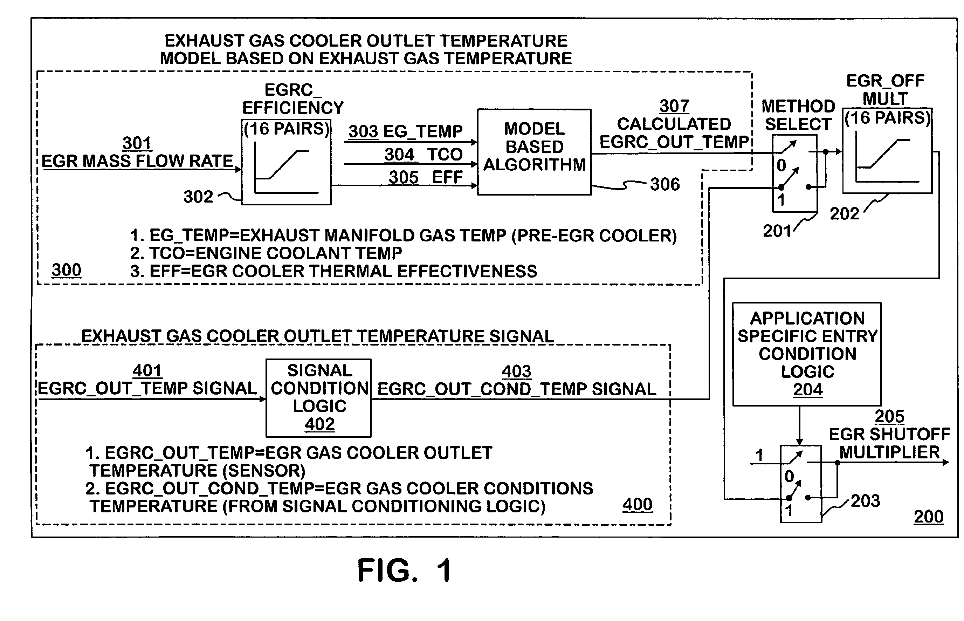

Figure 1 - Internal Combustion Engine with Exhaust Gas Recirculation System

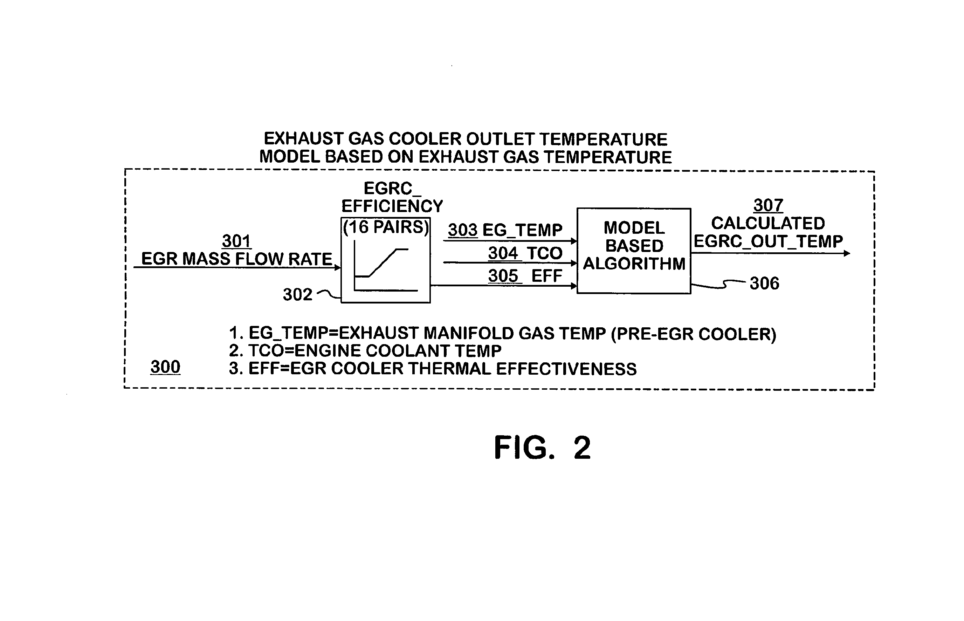

Figure 2 - Exhaust Gas Cooler Outlet Temperature Model based on Exhaust Gas Temperature

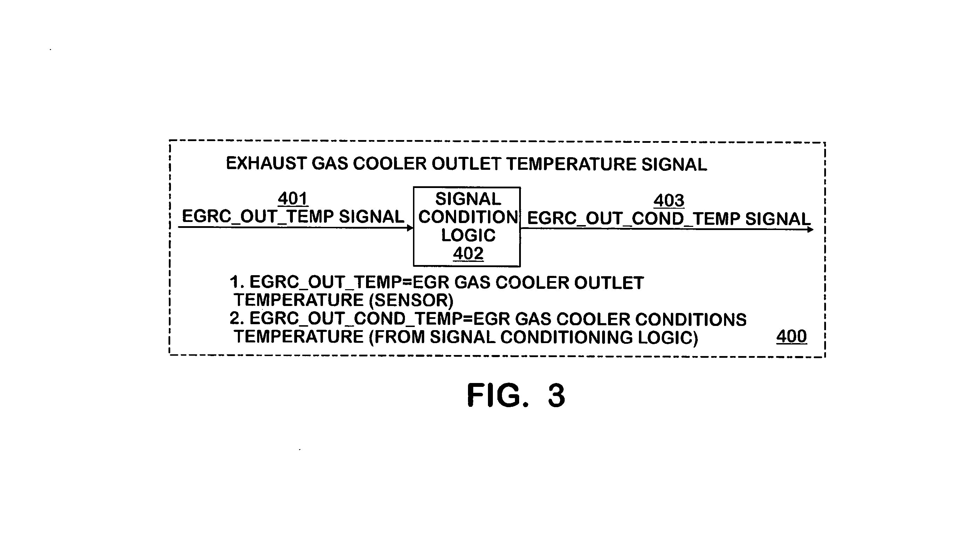

Figure 3 - Exhaust Gas Cooler Outlet Temperature Signal

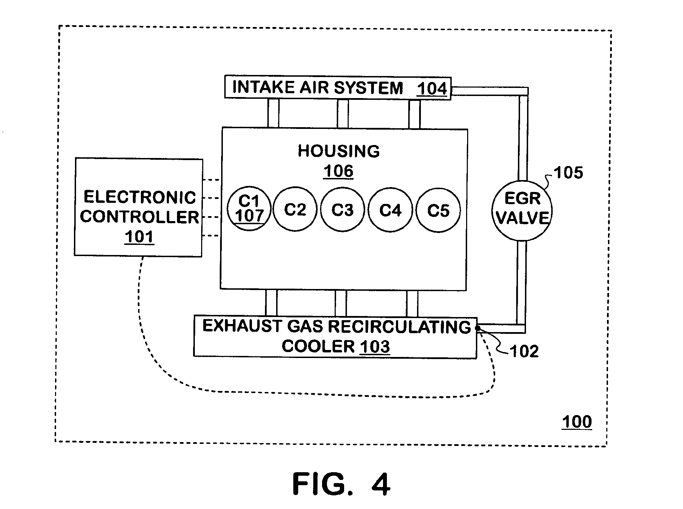

Figure 4 - Method Selection and EGR Valve Shutoff Enable Logic

### Detailed Description of the Invention

In accordance with one or more aspects of the present invention, a control strategy **200** may be provided to act in a manner as to control an exhaust gas recirculation (EGR) valve **105** and prevent fouling of the EGR valve **105** by utilizing an exhaust gas recirculation cooler outlet exhaust gas temperature sensor signal **401,** or a model-based EGR cooler outlet gas temperature signal **307** to control the EGR valve. In cases where the combustion products of the fuel utilized in the internal combustion engine **100** require special containment or bum-off, additional controls may be desired or required. For example, under transient conditions, additional control may be utilized to control to the amount of NOₓ generated.

An internal combustion engine **100** may contain an electronic controller **101,** an intake air system **104,** an exhaust gas recirculation cooler **103,** an exhaust gas recirculation valve **105,** and a sensor **102** located downstream of the exhaust gas recirculation cooler **103.** The term "downstream" shall be defined as a location after any one or more exhaust gas recirculation coolers **103** but before any one or more EGR valves **105.**

The EGR valve **105** may experience fouling due to the condensation of hydrocarbons at low EGR cooler outlet exhaust temperatures. The exact temperature to which hydrocarbons may condense may vary for each individual internal combustion engine should different materials and/or engine components be utilized. The exact temperature may be determined by running various internal combustion engine tests. Fouling may occur when the internal combustion engine **100** is operating at relatively low exhaust temperatures, namely during low speed and/or low torque operations.

The control strategy **200** may be activated by application specific entry condition logic **204.** This logic may be dependent on none, one or more of the following engine operating characteristics or any combination thereof: engine speed, exhaust gas temperature, engine coolant temperature, engine load, or any other engine operating characteristic. An engine operating characteristic may be described as any measured, calculated, or modeled quantifiable value, state, temperature, pressure, volume, mass, or any other variable utilized in the operation of an internal combustion engine that is obvious to one of ordinary skill in the art of internal combustion engines. If the entry condition(s) is (are) met the control system signal will pass through and the EGR valve **105** may close, either partially or fully. If the entry condition(s) is (are) false, the control system **200** may open the EGR valve **105,** either partially or fully.

In accordance with one or more aspects of the present invention, the control strategy **200** may act in a manner as to control an exhaust gas recirculation (EGR) valve **105** and prevent fouling of the EGR valve **105** by utilizing an exhaust gas recirculation cooler outlet exhaust gas temperature sensor signal **401.** The exhaust gas cooler outlet temperature signal control strategy **400** monitors the exhaust gas temperature downstream of the EGR cooler **103.** This signal is then sent through signal conditioning logic **402** prior to entering the control strategy **200.**

In accordance with one or more aspects of the present invention, the control strategy **200** may act in a manner as to control an exhaust gas recirculation (EGR) valve **105** and prevent fouling of the EGR valve **105** by utilizing a model-based EGR cooler outlet gas temperature signal **307.** The exhaust gas cooler outlet temperature model control strategy **300** may predict the exhaust gas temperature at the outlet of the EGR cooler **103** based on any one or combination of the following: exhaust gas temperature **303,** engine coolant temperature **304,** EGR cooler efficiency **302** or any other engine operating characteristic. These inputs may be manipulated via a model based algorithm **306.** The result of the algorithm **306** is then sent to the multiplier logic **202.** The model-based algorithm **306** may be created empirically or theoretically or any combination thereof. Actual internal combustion engine **100** or computer modeling experiments may be conducted to gather information and data required to create any model-based algorithm that may be utilized in the control strategy **200.**

The EGR cooler efficiency **302** may be dependent on the EGR mass flow rate **301.** For a given EGR mass flow rate **301** a resulting EGR cooler efficiency **302** will pass through as an input to the model based algorithm **306.**

The outputs of the exhaust gas cooler outlet temperature model **300** and the exhaust gas cooler outlet temperature signal **400** are sent to a method select logic **201.** This logic enables the user to determine what signal to pass through the control strategy **200.** If the method select logic **201** is false the model-based EGR cooler outlet gas temperature signal **306** will pass through as the signal. If the method select logic **201** is true the exhaust gas recirculation cooler outlet exhaust gas temperature sensor signal **403** will pass through as the signal.

The output from the method select logic **201** enters an EGR OFF multiplier logic block **202.** This logic includes a range of temperatures and either values 0 to 1 or 0% to 100% which corresponds to the EGR valve **105** being closed or open, respectively. The output of the EGR OFF multiplier logic block **202** may be between to 1 or 0% to 100% in which case the EGR valve may be partially closed or open.

The output from the EGR OFF multiplier logic block **202,** enters a switch **203** which may be activated by application specific entry condition logic **204.** This logic may be dependent on engine speed, exhaust gas temperature, engine coolant temperature, or engine load. If the entry condition(s) is (are) met the multiplier value **202** will pass through and control the EGR valve **105.** If the entry condition is false, the multiplier value **202** will open the EGR valve **105.**

## Claims

1. An internal combustion engine, comprising:
a housing,
at least one cylinder, disposed within the housing, within which the
combustion of fuel occurs to generate combustion exhaust gas,
an exhaust gas recirculation (EGR) cooler through which none or at least a
portion of the combustion exhaust gas is passed,
an intake air system through which atmospheric air and none or at least a
portion of the recirculated exhaust gas enters and mixes with the incoming atmospheric air and flows through the internal combustion engine,
an exhaust gas recirculation valve disposed downstream of the EGR cooler to
vary the amount of recirculated exhaust gas mixed with the atmospheric air,
one or more sensors for sensing one or more characteristics associated with
the engine operation representative of combustion exhaust gas temperature downstream of the exhaust gas recirculation cooler or any engine operating condition and sending one or more signals representative thereof; and
at least one electronic controller in communication with the internal
combustion engine, for receiving the one or more signals and controlling the EGR valve in response thereto.

2. The internal combustion engine of claim 1, wherein
the one or more sensors for sensing one or more characteristics associated
with the engine operation representative of combustion exhaust gas temperature downstream of the exhaust gas recirculation cooler is a temperature sensor.

3. The internal combustion engine of claim 1, wherein
the one or more sensors for sensing one or more characteristics associated
with the engine operation representative of combustion exhaust gas temperature are utilized to model or estimate the exhaust gas temperature downstream of the exhaust gas recirculation cooler.

4. The internal combustion engine of claim 1, wherein
the EGR valve is moved to a partially- or fully- closed position upon the one
or more sensors sensing a temperature below a pre-determined temperature.

5. The internal combustion engine of claim 1, wherein
the pre-determined temperature may vary for each individual internal
combustion engine should different materials and/or engine components be utilized.

6. The internal combustion engine of claim 1, wherein
the pre-determined threshold can be determined by running various internal
combustion engine tests.

7. The internal combustion engine of claim 1, wherein the one or more sensors monitors the temperature downstream of the exhaust gas recirculation cooler.

8. The internal combustion engine of claim 1, wherein the one or more sensors monitors engine speed.

9. The internal combustion engine of claim 1, wherein the one or more sensors monitors exhaust gas temperature.

10. The internal combustion engine of claim 1, wherein the one or more sensors monitors engine coolant temperature.

11. The internal combustion engine of claim 1, wherein the one or more sensors monitors engine load.

12. The internal combustion engine of claim 1, wherein the one or more sensors monitors injection fuel quantity.

13. The internal combustion engine of claim 1, wherein the one or more sensors monitors engine oil temperature.

14. The internal combustion engine of claim 1, wherein the one or more sensors monitors any engine operating characteristic.

15. A control system for an internal combustion engine having an exhaust gas recirculation cooler and an exhaust gas recirculation valve, comprising:
one or more sensors for sensing one or more characteristics associated with
the engine operation representative of combustion exhaust gas thermal energy downstream of the exhaust gas recirculation cooler and sending one or more signals representative thereof; and
at least one electronic controller in communication with the internal
combustion engine, for receiving the one or more signals and controlling the EGR valve in response thereto.

16. The control system of claim 6, wherein the one or more sensors monitors the temperature downstream of the exhaust gas recirculation cooler.

17. The control system of claim 6, wherein the one or more sensors monitors engine speed.

18. The control system of claim 6, wherein the one or more sensors monitors exhaust gas temperature.

19. The control system of claim 6, wherein the one or more sensors monitors engine coolant temperature.

20. The control system of claim 6, wherein the one or more sensors monitors engine load.

21. The control system of claim 6, wherein the one or more sensors monitors injection fuel quantity.

22. The control system of claim 6, wherein the one or more sensors monitors engine oil temperature.

23. The control system of claim 6, wherein the one or more sensors monitors any engine operating characteristic.

24. The control system of claim 6, wherein the electronic controller contains mathematical, or model-based, algorithms to calculate various engine
operating characteristics.

25. A method for controlling the internal combustion engine having an exhaust gas recirculation cooler and an exhaust gas recirculation valve:
activating the control system when any one or more application specific entry
conditions are met,
utilizing one or more sensors to measure the exhaust gas downstream of the
exhaust gas cooler,
utilizing one or more sensors to measure to the exhaust gas recirculation mass
flow rate,
determining the exhaust gas cooler efficiency,
modeling the temperature of the exhaust gas downstream of the exhaust gas
cooler,
selecting either the modeled temperature downstream of the exhaust gas
cooler or the measured temperature downstream of the exhaust gas cooler, determining the desired position of the exhaust gas recirculation valve based
on the modeled temperature downstream of the exhaust gas cooler, any one or combination of modeled engine operating characteristics, the measured temperature downstream of the exhaust gas cooler, or any measured one or combination of modeled engine operating characteristics and
actuating the exhaust gas recirculation valve, either partially or fully closed or
open, if any one or more application specific entry conditions are met.

26. The method of claim 13 for controlling the internal combustion engine having an exhaust gas recirculation cooler and an exhaust gas recirculation valve, wherein
the one or more entry conditions may be any one or more engine operating characteristics including engine speed, exhaust gas temperature, engine coolant temperature, engine load, injection fuel quantity, or engine oil temperature.
